# EUROPÄISCHE PATENTANMELDUNG

(11) **EP 2 224 140 A2**
(43) Veröffentlichungstag der Anmeldung: **01.09.2010**
(21) Anmeldenummer: 10401017.8
(22) Anmeldetag: 04.02.2010
(51) Int. Cl.: F16B 5/01, F16B 11/00

(54) **Verfahren zum Befestigen von Einsatzkörpern in Leichtbauplatten, entsprechend ausgestattete Einsatzkörper und deren entsprechende Verwendung**

(30) Priorität: 28.02.2009 DE 102009010961
(71) Anmelder: fischerwerke GmbH & Co. KG, 72178 Waldachtal (DE)
(72) Erfinder: Schlenk, Christian, 79211 Denzlingen (DE); Vogel, Martin, 79286 Glottertal (DE); Grün, Jürgen, 79268 Bötzingen (DE)

(57) **Zusammenfassung**

Die Erfindung betrifft ein Verfahren zum Befestigen von Einsatzkörpern in einer Leichtbauplatte, die eine obere und eine untere Decklage aufweist, zwischen denen ein Füllmaterial angeordnet ist, bei dem eine mindestens abschnittsweise Verklebung zwischen den Einsatzkörpern und der Leichtbauplatte durch Erwärmung eines Klebemittels vorgenommen wird, wobei die Erwärmung des Klebemittels (7) mittels elektrischer, elektromagnetischer oder magnetischer statischer Felder oder insbesondere entsprechender Wechsel-Felder erfolgt, beispielsweise durch Mikrowellen und/oder Induktion. Die Erfindung betrifft auch mit Klebemitteln mit geeigneten Zusätzen ausgestattete Einsatzkörper und deren Verwendung.

## Beschreibung

Die Erfindung betrifft ein Verfahren zum Befestigen von Einsatzkörpern in einer Leichtbauplatte, die eine obere und eine untere Decklage aufweist, zwischen denen ein Füllmaterial angeordnet ist, bei dem eine mindestens abschnittsweise Verklebung zwischen den Einsatzkörpern und der Leichtbauplatte durch Erwärmung eines Klebemittels vorgenommen wird. Die Erfindung betrifft auch mit einem Klebemittel ausgestattete Einsatzkörper und deren Verwendung.

Leichtbau spielt in der Möbelindustrie eine wichtige Rolle, beispielsweise zur Materialersparnis, um wegen der Materialersparnis möglichst preiswert Möbel und dergleichen herstellen zu können, zum anderen, um möglichst leichte Möbel und dergleichen zu erhalten, beispielsweise im Falle von Mitnahmemöbeln.

Leichtbauplatten, häufig auch Sandwichplatten genannt, wie Wabenplatten sind gekennzeichnet durch äußere Beschichtungen, zwischen denen homogene (z.B. in Schaumform) oder vorzugsweise inhomogene Materialien vorhanden sind.

Leichtbauplatten eröffneten früh die Möglichkeit zur Leichtbauweise (bereits in den 50er und 60er Jahren des vergangenen Jahrhunderts). Schon damals wurden beispielsweise Papierwabenfüllungen verwendet, oder ein hohler Kern wurde durch jeweils einzeln in Abständen eingesetzte Massivholzleisten unterstützt.

Während beispielsweise bei Spanplatten Gewichte von 600 bis 750 kg/m³ üblich sein können, liegen entsprechende Gewichte für Wabenplatten nur bei rund 150 bis 450 kg/m³.

Das Konstruktionsprinzip von Wabenplatten beruht, wie erwähnt, auf dem Sandwichaufbau, das heißt, einem mehrschichtigen Aufbau. Die einfachste Form von Wabenplatten ist beispielsweise dreischichtig: Außen liegen jeweils eine obere und eine untere Decklage vor, dazwischen eine Zwischenschicht. Letztere hat die Aufgabe, die Decklagen zu stützen, Querkräfte aufzunehmen und für den gewünschten Abstand der Decklagen und somit die Dicke der Wabenplatten zu sorgen.

Je nach Ausformung der Zwischenschicht können verschiedene Formen von Zellen durch die Zwischenschicht und die Deckschichten gebildet werden, die Zellen können mehreckig (z.B. in Form von Bienenwaben, quadratisch, rechteckig, dreieckig, gewellt z.B. in Form von Wellstegeinlagen) oder rund sein, wobei in der Regel sich regelmäßig wiederholende Strukturen vorliegen. Die Materialien für die Zwischenschicht können Papier, Pappe, Holz, Metalle (wie Aluminium), Kunststoffe oder dergleichen sein. Im Möbelbau werden oft Altpapierwaben aus ökonomischen Gründen verwendet.

Als Decklagen werden unterschiedliche Materialien verwendet, beispielsweise plattenförmige dünne Holzwerkstoffe, Furniere, dicke Papierlagen bis hin zu HPL-Dekorlaminiaten. Diese Materialien können beispielsweise Dicken von einigen Millimetern haben, z.B. von 3 bis 8 mm.

Es werden jährlich Millionen von Quadratmetern solcher Wabenplatten hergestellt.

Außer im Möbelbereich sind für Wabenplatten noch eine Vielzahl von anderen Verwendungen denkbar, etwa im Flugzeugbau, für Displays im Messe-, Laden- und Kulissenbau, als Verpackungsmaterial in Form von Schutzbehältern und als Kernmaterial für Verkleidungsteile beispielsweise im Kraftfahrzeugbereich.

Eine Vielzahl von Beschlägen findet sich an Möbeln, beispielsweise in Form von Scharnieren, Schienen für Schubladen, Griffen und dergleichen mehr.

Allgemein ist zu fordern, dass sich zukünftige Beschlagssysteme an folgenden Kriterien orientieren: Angemessen niedrige Preise, Umsetzbarkeit mit herkömmlichen Anlagen der Möbelindustrie, der Belastung entsprechende Festigkeiten und Berücksichtigung des Trends der Möbelindustrie zur Miniaturisierung der Beschläge (siehe auch Jan Poppensieker und Heiko Thömen, Arbeitsbericht der Bundesforschungsanstalt für Forst- und Holzwirtschaft Hamburg , Nr. 2005/02 vom April 2005).

Um solche Beschläge oder dergleichen befestigen zu können, müssen Riegelmaterialien (als welche auch eingelegte Rahmen fungieren können) eingebracht werden. Bei Wabenplatten ohne Riegelmaterial ist die Beschlagsbefestigung dagegen problematischer: Die üblichen auf Schraub-, Klemm- oder Spreizmechanismus basierenden Befestigungstechniken lassen sich nicht anwenden, da eine ausreichend feste Verankerungsmöglichkeit fehlt. Als Alternative wurden Spreizdübel verwendet, die in die Decklagen eingebohrt werden, oder Blindnietnuten. Auch das Einschweißen von Kunststoffadaptern nach deren Einbohren und das Verschweißen mittels Ultraschall mit den beiden Decklagen wurde probiert.

Alternativ wurden eingeklebte Einsatzkörper (Inserts) verwendet, die in vorgeformte oder eingebohrte Ausnehmungen, welche vorzugsweise nur eine der Deckschichten durchdringen, während die andere unbeeinträchtigt bleibt, eingesetzt werden und in die anschließend beispielsweise über eine Öffnung im Insert Klebstoff eingebracht wird. Die DE 10 2005 060 528 A1 beispielsweise beschreibt ferner entsprechende Inserts, die durch Verkleben mit thermoplastischen Materialien an den Seiten der Ausnehmungen einer Decklage und/oder der Innenseite der gegenüberliegenden Decklage für Befestigung sorgt. Das Aufschmelzen des Klebstoffes erfolgt dort vorteilhaft durch Wärmezufuhr mittels Ultraschallschweißung.

Schwierigkeiten bei der Serienanwendung kann hier jedoch bereiten, dass für die für die Übertragung des Ultraschalls verwendete Sonotrode nicht ohne weiteres alle Stellen erreichbar sind, die verklebt werden sollen, und dass eine Reibung zwischen dem verwendeten Kleber und den Kontaktstellen in der Wabenplatte und am Insert nötig ist, um die erforderliche Wärme zu erzeugen. Hierbei kann die Dosierung Probleme bereiten, und es können Anpassungen an alle möglichen Varianten von Inserts und Wabenplatten vorgenommen werden. Auch kann es erforderlich sein, dass das verwendete Klebemittel einen relativ niedrigen Schmelzpunkt besitzen muss und so bei erhöhten Temperaturen nicht mehr hinreichend fest ist.

Als Alternativen werden in der DE 10 2005 060 528 A1 noch Einkleben, Einleimen, Reibschweißung durch Drehung oder Laserschweißen erwähnt, die ebenfalls sehr spezielle und an unterschiedliche Gegebenheiten eher aufwändig anzupassende Maßnahmen und Vorrichtungen erfordern, oder auch laserlichtdurchlässige Materialien.

Aufgabe der vorliegenden Erfindung ist vor diesem Hintergrund die Schaffung eines neuen Verfahrens, das ohne größere technische Anpassungsmaßnahmen das Befestigen von - auch vorkonfektionierten - Inserts und dergleichen in Leichtbauplatten ermöglicht, die einfache Verwendung auch unterschiedlicher Inserts gestattet, die maschinelle Verarbeitbarkeit vereinfacht, durch Magazinierbarkeit von Inserts eine rationelle und flexible Fertigung ermöglicht, eine schnelle Aushärtung ermöglicht, preisgünstig ist und/oder ermöglicht, noch höhere Belastbarkeit der Inserts und der damit verbundenen Beschläge zu erzielen.

Vorteilhaft wäre insbesondere, wenn die Inserts bereits während des Herstellungsprozesses der Wabenplatten maschinell setzbar sind und so auch maschinell eingebracht werden können.

Dies wird durch ein eingangs im ersten Absatz dieser Anmeldung beschriebenes Verfahren erreicht, welches **dadurch gekennzeichnet** ist, dass die Erwärmung des Klebemittels mittels elektrischer, elektromagnetischer oder magnetischer statischer Felder oder insbesondere Wechsel-Felder erfolgt.

Hierfür werden Klebemittel verwendet, welche ein oder mehrer, eine Erwärmung mittels der genannten Felder ermöglichende Zusätze aufweisen.

Dies ermöglicht, ohne die Notwendigkeit speziell adaptierter Sonotroden, gewünschtenfalls gerichtet oder großflächig Energie einzustrahlen, die vor allem auf das Klebemittel selbst wirkt, ohne eine Reibung zwischen diesem und anderen Komponenten zu erfordern. Auch wären andernfalls die Anforderungen an das Material der Sonotrode sehr hoch, da diese dem Ultraschall standhalten müssen (beispielsweise nennt die DE 10 2005 060 528 karbidbeschichtetes Titan).

Erfindungsgemäß kann die Erwärmung in einer Ausführungsform der Erfindung mittels Mikrowellen und/oder in einer anderen, besonders vorteilhaften Ausführungsform bei geeigneten Klebemitteln durch Induktion erfolgen.

Die Bestrahlung mit Mikrowelle erfolgt dabei in Abwesenheit oder insbesondere in Anwesenheit eines statischen äußeren magnetischen Feldes, beispielsweise mit einer Stärke von bis ca. 15 Tesla, z.B. von 0,1 bis 10 Tesla. Die Mikrowellenstrahlung kann dabei unpolarisiert oder (zur einfacheren Vermeidung von Maxima und Minima, die zu ungleichmäßiger Erhitzung unterschiedlicher Bereiche der Klebemittel führen würde) vorzugsweise polarisiert, insbesondere zirkular polarisiert sein. Letzteres bewirkt, dass reflektierte Strahlung entgegengesetzt zirkular polarisiert ist und somit keine störende Interferenz zur Ausbildung ausgeprägter Maxima und Minima resultierender stehender Wellen führen kann. Die Frequenz verwendeter Mikrowellen liegt dabei vorzugsweise im Bereich von 300 MHz bis 300 GHz, wie beispielsweise zwischen 500 MHz und 10 GHz, als Beispiel für einen bevorzugten Bereich in einem Bereich zwischen 700 MHz und 3 GHz.

Bei der Verwendung von Mikrowellen werden vorzugsweise durch Mikrowellen erwärmbare Klebemittel, insbesondere solche mit ein oder mehreren diese Erwärmung ermöglichenden Zusätzen, wie ferrimagnetischen, vorzugsweise nanoskaligen Zusätzen, beispielsweise Nanopartikel z.B. mit einer Größe von 0,1 bis 200, wie von 0,2 bis 100, z.B. von ungefähr 5 nm, verwendet, wie etwa Ferrite.

Der Anteil des oder der die Erwärmung ermöglichenden Zusätze im Klebemittel kann, bezogen auf dessen Gesamtmasse, bei 0,01 bis 80 Gew.-% liegen, vorzugsweise bei 1 bis 20 Gew.-%, betragen.

Als Ferrite im Falle der Mikrowellenbestrahlung sind solche, die eine relativ große Spinrelaxationszeit ωT >> 1 aufweisen, vorzugsweise im Bereich von 915 MHz bis 6 GHz oder einem geeigneten Ausschnitt davon, beispielsweise Spinrelaxationszeiten zwischen 1,5 und 100 bei f = 2,45 GHz, geeignet. Unter den geeigneten Beispielen kann man Ni_{0,4}Zn_{0,6}Fe₂O₄, Mn_{0,7}Zn_{0,3}Fe₂O₄, Fe₃O₄ oder Co_{0,2}Zn_{0,8}Fe₂O₄, oder dergleichen Ferrite nennen.

Um eine möglichst geringe Entstehung von Maxima und Minima zu erzielen, ist es vorteilhaft, die zugesetzten Nanopartikel einem statischen Magnetfeld zur Vormagnetisierung der Ferrite derart auszusetzen (vgl. DE 10 2004 004 764 A1), dass die Nanopartikel in den Zustand ferromagnetischer Resonanz (FMR) geraten, da sie dann einen stark ausgeprägten Dichroismus aufweisen. Dies bewirkt, dass die Nanopartikel ausschließlich die polarisierten Wellen absorbieren, deren Polarisationsvektor sich in Richtung der Feldlinien des statischen (Gleichstrom-)Magnetfeldes betrachtet im Uhrzeigersinn (rechtszirkulär) dreht. Linkszirkular polarisierte Wellen dagegen werden nicht absorbiert und durchdringen den Klebstoff ohne Abschwächung und tragen so zur Erwärmung nichts bei. Die zurücklaufenden Wellen sind entgegengesetzt polarisiert. So kommt es zu keiner Interferenz mit der gegenläufigen Welle.

"Ungefähr" bedeutet, wo es in der vorliegenden Beschreibung verwendet wird, "im Rahmen üblicher Schwankungen", beispielsweise von -10 % bis + 10 % des jeweils genannten Zahlenwertes, wie von -5 % bis + 5 % davon. Wo Zahlen oder Zahlenbereiche angegeben werden, ist im Rahmen der vorliegenden Offenbarung stets "ungefähr" gemeint, auch wenn dies nicht explizit gesagt ist. "Ungefähr" impliziert auch "genau" den betreffenden Zahlenwert.

Andererseits kann es vorteilhaft sein, stehende Wellen mit Minima und Maxima auszunutzen, um nur bestimmte Abschnitte etwa einer durchlaufenden Leichtbauplatte, wie Wabenplatte, zu erwärmen, wobei durch die relative Bewegung für gleichmäßige Erwärmung an den gewünschten Stellen gesorgt werden kann. Umgekehrt kann auch die Mikrowellenstrahlvorrichtung bzw. deren Ausgang (z.B. Hohlleiter oder Hohlraumresonator) beweglich gegenüber dem Leichtbaumaterial vorgesehen sein, oder beide sind relativ zueinander beweglich Dann ist es auch ohne weiteres möglich, auf eine Polarisierung der Mikrowellenstrahlung zu verzichten (vgl. WO 2005/060316).

Vorteilhaft und sehr einfach erfolgt die Erwärmung auf induktivem Wege. Hierzu werden geeignete Klebemittel mit ein oder mehreren induktive Erwärmung ermöglichenden Zusätzen verwendet, worunter insbesondere ferromagnetische Stoffe wie (i) ferromagnetische Metalle, z.B. Eisen (auch in ferromagnetischen Edelstählen), Kobalt, Nickel, wie (ii) ferromagnetische Legierungen, wie AINiCo, SmCo, Nd₂Fe₁₄B, NiFe ("Permalloy") oder NiFeCo ("Mumetall"), ferner Chromdioxid, Manganarsenid, Europiumoxid oder bei tieferen Temperaturen auch Gadolinium, Dysprosiom, Holmium, Erbium und Terbium, oder wie (iii) ferrimagnetische Stoffe, wie Oxide der Formel MO·Fe₂O₃, worin M Mangan, Kobalt, Nickel, Kupfer, Magnesium, Zink, Cadmium oder Eisen sein kann. Die Teilchen können beispielsweise auch in ein Matrixmaterial eingehüllt sein, wie Siliziumdioxid (vgl. MagSilica® der Firma Degussa). Vorteilhaft liegt die Curietemperatur oberhalb oder im Bereich der Temperatur, auf die erwärmt werden soll.

Der oder die induktive Erwärmung ermöglichenden Zusätze sind vorzugsweise in partikulärer (z.B. runder, annähernd runder, eckiger, länglicher oder anderer Form) Form vorgesehen, das heißt, als Füllstoffpartikel. Sie können nanoskallige Dimensionen haben wie oben für die durch Mikrowellen genannten Klebemittel genannt, oder allgemeiner Größen beispielsweise von 0,1 nm bis 500 µm aufweisen.

Die Kombination von induktiver Erwärmung und der Verwendung ferro- oder ferrimagnetischer Stoffe ist dabei ein besonders bevorzugter Aspekt der Erfindung.

Insbesondere bei Verwendung unbedenklicher induktive Erwärmung ermöglichender Zusätze, wie Eisen, aber (auch) wegen der Einschließung dieser Materialien in die Klebmittelmatrix, sind die Produkte auch sehr umweltfreundlich.

Der Anteil des oder der induktive Erwärmung ermöglichenden Zusätze im Klebemittel kann, bezogen auf dessen Gesamtmasse, 0,01 bis 80 Gew.-%, vorzugsweise 0,1 bis 20 Gew.-%, betragen.

Die Induktion kann durch geeignete elektrische, elektromagnetische oder magnetische Felder erfolgen, wie durch statische elektrische magnetische oder elektromagnetische Felder (dann entsteht die nötige Bewegung durch relative Bewegung der Felderzeuger und/oder der Leichtbauplatten zueinander), oder insbesondere elektrische Wechselfelder oder vor allem magnetische Wechselfelder oder elektromagnetische Wechselfelder.

Vorteilhaft ist, wenn vorkonfektionierte Inserts verwendet werden (womit allgemein solche gemeint sind, die bereits mit einem geeigneten Erwärmung ermöglichenden Klebemittel an den gewünschten Stellen versehen sind), da dann kein weiterer Schritt zum Applizieren des Klebemittels erforderlich ist. Die Vorkonfektionierung der Inserts erleichtert auch die Magazinierbarkeit, da die vorkonfektionierten Inserts in ausreichender Zahl und Vielfalt bereitgestellt werden können und lagerbar sind.

Vorteilhaft weisen die Inserts im vorstehenden Fall oder allgemein auch Rastelemente, z.B. Rastvorsprünge und/oder Rastlamellen, auf, welche eine ausreichende Fixierung vor dem Verkleben in Ausnehmungen der Wabenplatte, wie Löchern, erlauben. Dies ermöglicht eine gewisse Sofortstabilität der Inserts nach dem Einbringen bereits vor dem Verkleben, und ermöglicht eine ausreichend stabile Positionierung bereits vor dem Erwärmen des Klebemittels, uum anderen eine Höheneinstellung der Inserts in der Wabenplatte. Zur genaueren Positionierung können die Inserts auch einen mindestens einen Teil aufweisen, der eine Höhenverstellbarkeit gewährleistet, beispielsweise in teleskopartig eingebrachtes Innenteil mit einem Gewinde oder Rastlammellen zur Einstellbarkeit der Höhe gemeinsam mit dem anderen Teil.
Vorteilhaft ist, wenn die Erwärmung nach dem Setzen des Inserts durch Durchlaufen der Leichtbauplatte einer kurzen Induktionszone bewirkt wird. Dies ermöglicht auch die zeitnahe Weiterverarbeitung, da nach möglicher schneller Reaktion und/oder Verfestigung des Klebemittels nach Durchlaufen der Induktionszone direkt eine Weiterverarbeitung (beispielsweise Einbringen von Beschlägen in die Inserts) möglich ist.

Geeignete Vorrichtungen für geeignete Felder sind alle, die eine induktive Erwärmung der Klebemittel mit den induktive Erwärmung ermöglichenden Stoffen erlauben und ein statisches oder vorzugsweise Wechselfeld erzeugen, insbesondere in statisches magnetisches oder elektromagnetisches Wechselfeld.

Als mögliche Klebemittel für erfindungsgemäße Verfahren, Produkte oder Verwendungen kommen Hotmelts (Heißschmelzkleber), wie PE-Hotmelt, oder (wärmeaktivierbare) Reaktivkleber, wie ein- oder mehrkomponentige härt- oder vernetzbare oder polymerisierbare (Reaktiv)-Harze in Betracht, welche z.B. als härt- oder vernetzbare funktionelle Gruppen Gruppen Epoxid-, Amino-, Thiol-, Hydroxy-, Acrylat-, Methacrylat-, Cyanoacrylat, Cyanomethacrylat-, Vinyl-, Isothiocyanat-, Isocyanat- oder dergleichen -Gruppen (auch in verkappter Form, beispielsweise mit Schutzgruppen maskiert) in dem Fachmann geläufiger geeigneter Kombination beinhalten können, beispielsweise Edukte für Polyurethane, Polyharnstoffe, Epoxidaddukte oder dergleichen mehr, oder auch entsprechende Klebemittel mit latenten (wie Ammoniumsulfit für Melamin-Formaldehydharze, oder für Epoxid/Polyurethanharze auf Basis von Isocyanaten, Epoxiden und di- oder polyfunktionalen Aminen, wie Morpholin- oder Imidazolylverbindungen) oder wärmelabilen (durch Wärme aktivierbaren) Härtern.

Schaumbildner können dem Klebemittel zugesetzt sein - beispielsweise kann beim Erwärmen ein bei der erhöhten Temperatur siedendes Lösungsmittel, wie ein Kohlenwasserstoff, ein entsprechend siedendes (ökologisch unbedenkliches) halogenhaltiges Treibgas oder ein beim Erwärmen Kohlendioxid freisetzendes Reaktionsgemisch (z.B. ein Gemisch aus einer erst bei Erwärmen aus einem Carbonatsalz Kohlendioxid freisetzenden Säure) dem Klebemittel zugesetzt oder Bestandteil davon sein. Dies ermöglicht vorteilhaft ein Ausfüllen von Hohlräumen und die Kontaktaufnahme des Klebemittels beispielsweise mit Oberflächen des Füllmaterials, der Decklagen und/oder von Leichtbaumaterialien. Auch kann durch einen Gehalt an Wasser und (z.B. auch verkappten) Isocyanaten eine Kohlendioxidbildung ausgelöst werden.

Die Klebemittel können außer den eigentlichen Klebekomponenten (physikalisch härtende und/oder Reaktivkleber-Komponenten) und den eine Erwärmung mittels elektrischer, elektromagnetischer oder magnetischer statischer Felder oder entsprechender Wechselfelder ermöglichenden Zusätzen und gegebenenfalls Schaumbildnern weitere übliche Zusätze beinhalten, wie sie für entsprechende Klebemittel üblich sind, beispielsweise Härter (auch latent), Beschleuniger, Inhibitoren, Füllstoffe, Weichmacher, nicht reaktive Verdünnungsmittel, Flexibilisatoren, Stabilisatoren, Härtungskatalysatoren, Rheologiehilfsmittel, Thixotropiermittel, Netzmittel, färbende Zusätze, wie Farbstoffe oder insbesondere Pigmente, oder Gemische von zwei oder mehr davon, möglich. Derartige weitere Zusätze können vorzugsweise insgesamt, bezogen auf die gesamte Masse des chemischen Befestigungssytems, in Gewichtsanteilen von insgesamt 0 bis 90 %, beispielsweise außer im Falle von Füllstoffen von 0 bis 40 Gew.-%, zugesetzt sein.

Die Erwärmung durch die genannten Felder, wie durch Mikrowelle oder induktive Erwärmung, findet vorzugsweise auf Temperaturen beispielsweise zwischen ungefähr 40 und ungefähr 250 °C, wie zum Beispiel zwischen ungefähr 80 und ungefähr 220 °C, statt.

Es sei noch erwähnt, dass bei reversibel schmelzbaren Klebstoffen erfindungsgemäß auch ein "Bonding on Demand" stattfinden kann, das heißt, es ist auch möglich, später (z.B. zum Recycling) entsprechend festgeklebte Inserts durch Aufschmelzen des Klebemittel in entsprechenden elektrischen, magnetischen oder elektromagnetischen Feldern einfach zu entfernen.

Der Begriff Insert bedeutet in der vorliegenden Offenbarung ein Einsatzteil, das zum Befestigen von Beschlägen dienen kann, das Insert kann aber auch selbst ein Beschlag sein.

Die Erfindung betrifft auch Inserts für Leichtbauplatten, die mit einem durch Mikrowellen erwärmbaren Klebemittel oder vorzugsweise einem Klebemittel mit ein oder mehreren induktive Erwärmung ermöglichenden Zusätzen wie vorstehend beschrieben an geeigneten Bereichen ihrer Innen- oder Außenseite ausgerüstet sind, sowie deren Verwendung, die das Einbringen, das Erwärmen und gegebenenfalls das Befestigen von Beschlägen mittels der Inserts beinhaltet.

Die Inserts (sowohl als solche, als auch im erfindungsgemäßen Verfahren und/oder bei der erfindungsgemäßen Verwendung) können in einfacher Hülsenform, mit fußständigem Boden, erweitertem Kopfbereich, verengtem Halsbereich, mit Hinterschneidungselementen, wie ein oder mehreren Rastelementen, z.B. Rastvorsprüngen oder Rastlamellen, zum Sichern hinter der oberen Decklage einer Leichtbauplatte, mit Bereichen, wie ein oder mehreren Zuspitzungen, die ein Eindringen in eine untere Decklage ermöglichen, um so ein seitliches Verschieben des Fußbereichs der Inserts zu verhindern, mit Höhenregulierungselementen, beispielsweise erzielbar durch zwei- oder mehrteilige Ausführung der Inserts, wobei die einzelnen Teile in Längsrichtung zueinander vor der Fixierung beweglich, beispielsweise teleskopartig, ausgestaltet sind, beispielsweise durch Gewinde, Rastelemente oder Faltenbälge oder dergleichen, mit parallel zur Ebene der Decklagen erweiterten Fußelementen (um beispielsweise ein gutes Verkleben auf der Innenseite einer unteren Decklage zu ermöglichen), mit Längsschlitzung zum Erlauben eines Einsetzens unter Verringerung des Durchmessers durch Zusammendrücken und ein Fixieren durch anschließendes Erweitern nach Beendigung des Zusammendrückens zu ermöglichen, mit Elementen, wie Vorsprüngen, zum Kontakt mit einem Füllmaterial oder mit Kombinationen von diesen oder weiteren sinnvollen Merkmalen ausgeführt sein. Sie können ein- oder mehrteilig sein (dann kann nach der Positionierung die Verklebung mittels des Klebemittels auch eine Fixierung der einzelnen Teile relativ zueinander bewirken).

Sie können einerseits als erfindungsgemäße Inserts, die Klebemitteln mit ein oder mehren, eine Erwärmung mittels der genannten Felder ermöglichenden Zusätzen aufweisen, vorkonfektioniert sein. Insbesondere können sie mit einem durch Mikrowellen erwärmbaren Klebemittel oder vorzugsweise einem Klebemittel mit ein oder mehreren induktive Erwärmung ermöglichenden Zusätzen wie vorstehend beschrieben, an geeigneten Bereichen ihrer Innen- oder Außenseite ausgerüstet sein. Ein Beispiel sind Stellen, die innerhalb der Leichtbauplatten zu liegen kommen. Die (vorkonfektionierten) Inserts können von innen (wenn eine Durchtrittsmöglichkeit in den innerhalb der Leichtbauplatte zu liegenden Stellen vorgesehen ist) und/oder an innerhalb der Leichtbauplatten und/oder unterhalb eines Kopfbereichs, der das Klebemittel nach außen abdeckt, außerhalb der Leichtbauplatten zu liegen kommenden Stellen auf ihren Außenflächen, oder Bereichen dieser Stellen, mit einem dieser Klebemittel beschichtet ausgerüstet sein. Dies erlaubt die einfache Einführung der entsprechend mit Klebemittel ausgestatteten Inserts (vorkonfektionierte Inserts) in den erfindungsgemäßen Verfahren und Verwendungen.

In einem erfindungsgemäßen Verfahren kann andererseits das Klebemittel an den genannten Stellen der Inserts erst aufgebracht und dann die Erwärmung, insbesondere mittels Mikrowelle oder vorzugsweise Induktion, durchgeführt werden.

Vorzugsweise liegt hierfür die Viskosität eines Klebemittel bei Raumtemperatur im hochviskos-pastösen bis festen Bereich, damit das Klebemittel bei vorkonfektionierten Inserts nicht fließt, kann aber auch bei Einbringen des Klebemittels während der Herstellung (z.B. separat von den Inserts) niedriger sein, um eine Benetzung zu gewährleisten. Durch geringe Variation der Erwärmung kann eine günstige Viskosität im (an-)geschmolzenen Zustand eingestellt werden.

Dann können die entsprechend beschichteten Inserts in die Leichtbauplatte an den vorgesehenen Stellen eingebracht und durch Erwärmen des Klebemittels damit befestigt werden.

Bevorzugte Ausführungsformen der Erfindung finden sich auch in den Ansprüchen, insbesondere den Unteransprüchen. Die Ansprüche werden hier durch Bezugnahme aufgenommen.

Merkmale aus den Beispielen können anstelle von vorstehend oder in den Ansprüchen genannten allgemeineren Merkmalen einzeln oder zu mehreren oder bei allen die Ausführungsform entsprechenden Merkmalen eingesetzt werden, was zu bevorzugten Ausführungsformen der Erfindung führt.

Die nachfolgenden Beispiele können als bevorzugte Ausführungsformen der Erfindung betrachtet werden, dienen jedoch in erster Linie der Illustration der Erfindung, ohne ihren Umfang einzuschränken.

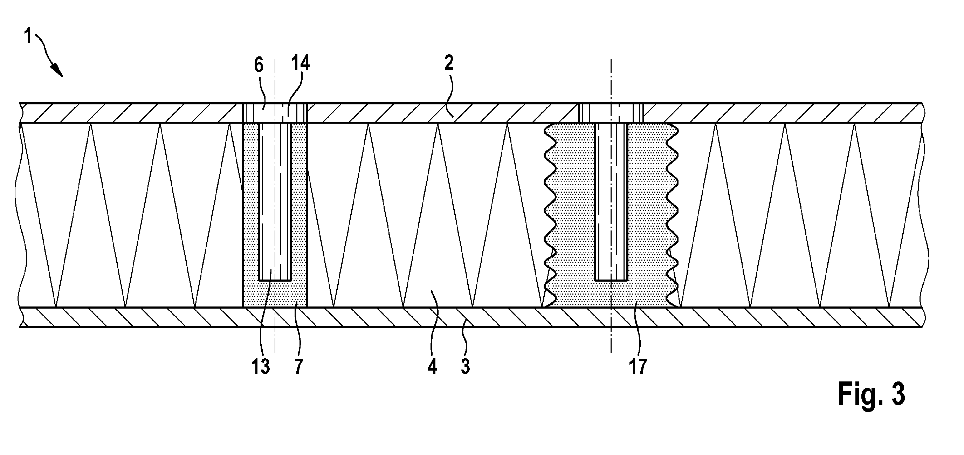

Die im folgenden beschriebenen Figuren dienen in erster Linie der Beschreibung der Beispiele:
Fig. 1: Schematische Darstellung einer Wabenplatte im teilweisen Querschnitt mit zwei Inserts mit Fußteil und Aufnahme für Befestigungselemente für Beschläge.
Fig. 2: Schematische Darstellung einer Wabenplatte mit drei Inserts,
   a) links mit Rastlamellen und Höhenverstellung, im wesentlichen bis auf Rastlamellen und/oder Gewinde als Querschnitt dargestellt,
   b) rechts vor (linker Teil) und nach dem Erwärmen (rechter Teil) des Klebemittels als Querschnitt mit Fixierung des Inserts durch teilweises Eindringen von dessen Fußbereich in die untere Decklage
Fig. 3: Schematische Darstellung einer Wabenplatte im Querschnitt mit zwei Inserts mit Aufnahme für Befestigungselemente mit vorkonfektionierter Hülse vor und bei dem Erwärmen des Klebstoffs

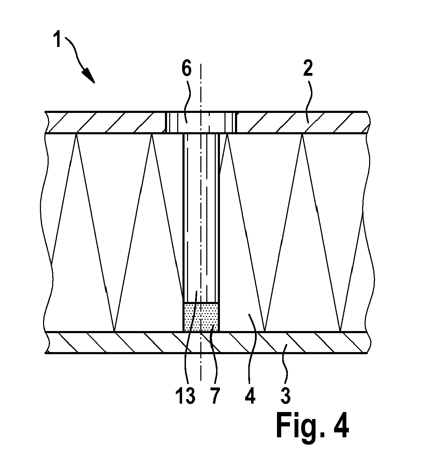

Fig. 4: Schematische Querschnittszeichnung einer Wabenplatte mit einem einfach stößig verklebten Insert

Im folgenden beziehen sich Richtungsangaben (oben, unten, rechts, links) lediglich auf die Darstellungen in den Figuren. Andere Anordnungen der Wabenplatte und der Inserts sind möglich.

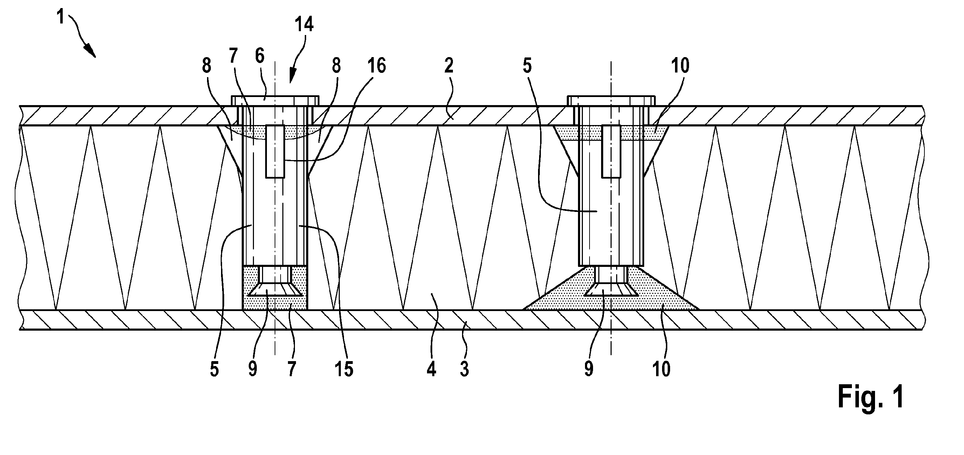

In Fig. 1 ist eine erste mögliche Erfindungsverkörperung beispielhaft dargestellt: In einer Leichtbauplatte, hier einer Wabenplatte 1, mit einer Decklage oben 2 und einer Decklage unten 3 sowie einem (hier als nichtlimitierendes Beispiel triangulär ausgeformten) Füllmaterial 4 befindet sich auf der linken Seite in einer Bohrung, welche die obere Decklage 2 durchdringt und sich zumindest teilweise auch in die untere Decklage 3 erstrecken kann, ein in die Bohrung (beispielsweise manuell oder maschinell) eingefügtes Insert 5, das an seinem oberen Ende mit Rückhalteelementen in Form von ein oder mehreren Rastelementen, hier als Rastvorsprünge 8 dargestellt, ausgerüstet ist, das oder die nach dem Einbringen des Inserts 5, gemeinsam mit dem erweiterten Kopfbereich 6 des Inserts 5 als Widerlager, für dessen Halt an der oberen Decklage 2 sorgt. Das Insert ist den oberen Bereich unterhalb der oberen Decklage 2, beispielsweise in einem Halsteil 16 zwischen Kopfteil 6 und Hauptteil 15 des Inserts 5 direkt unterhalb der oberen Decklage 2, und am unteren Fußteil 9 in dessen der unteren Decklage 3 zugewandten Bereich mit Klebemittel 7 bedeckt. Das Klebemittel 7 weist ein oder mehrere eine Erwärmung ermöglichende Zusätze, vorzugsweise durch Mikrowellen eine Erwärmung ermöglichende Zusätze oder insbesondere durch induktive Erwärmung ermöglichende Zusätze, auf, beispielsweise wie im allgemeinen Teil der Erfindung beschrieben. Nach relativer Bewegung zu einer Quelle für die erforderlichen Felder, vorzugsweise magnetische oder elektromagnetische Wechselfelder, beispielsweise durch Verfahren eines Mikrowellenbereichs oder insbesondere Induktionsbereiches oder vorteilhaft Durchfahren eines Mikrowellenbereichs oder insbesondere Induktionsbereiches, kommt es zu einem Schmelzen des Klebemittels 7, das sich so, wie auf der rechten Seite von Fig. 1 gezeigt, verteilt und für die Verklebung des Inserts 5 innerhalb der Wabenplatte 1 an der Unterseite von dessen oberer Decklage 2 und an der Oberseite von dessen unterer Decklage 3 sorgt. Das entsprechend aufgeschmolzene und ausgehärtete Klebemittel 10 ist ebenfalls auf der rechten Seite in Fig. 1 gezeigt. Eine wie im Beispiel gezeigte Aufweitung des Fußteils 9 kann innerhalb des ausgehärteten Klebemittels 10 für zusätzlichen Halt sorgen. Das Insert kann eine Aufnahme 14 für weitere Befestigungselemente oder Beschläge aufweisen.

Innerhalb des Inserts 5, das dafür beispielsweise mit Rückhaltevorsprüngen oder einem Gewinde ausgestattet sein kann (nicht dargestellt), können sodann Beschläge befestigt werden, sofern nicht das Insert 5 selbst bereits einen Beschlag darstellt.

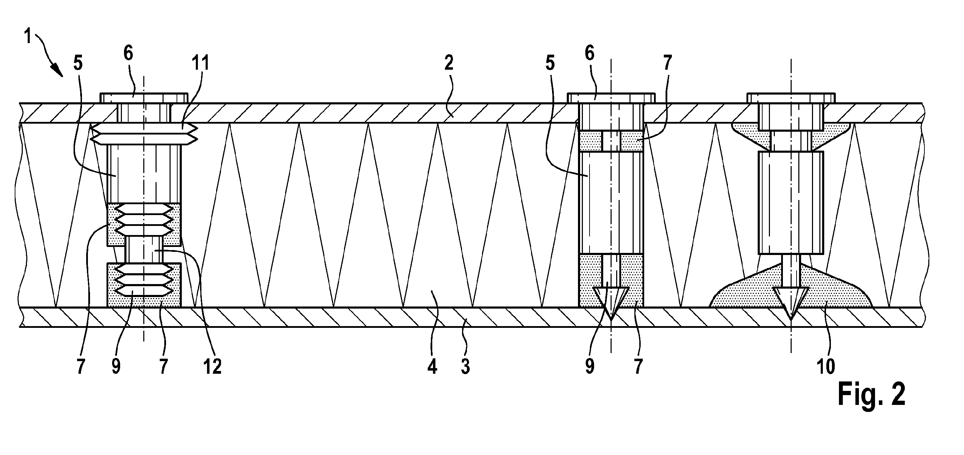

Fig. 2 zeigt links ein Insert 5 in einer Wabenplatte 1, welches mittels Rastlamellen 11 direkt unterhalb des Kopfbereichs 6 gehalten wird, wobei die Rastlamellen 11 nach dem Einsetzen des Inserts die Unterseite der oberen Decklage 2 hintergreifen, während von oben eine Aufweitung des Kopfbereichs 6 des Inserts 5 an der oberen Decklage 2 aufliegt, so dass diese das Insert lagestabil fixiert. Im unteren Bereich des Inserts 5 ist ein (hier mit Rastelementen ausgestattet dargestellter, aber ebenso gut mit einem Faltenbalg oder Gewinden ausgestattet einsetzbarer) Höhenausgleich 12 vorgesehen, der es erlaubt, die Länge des Inserts an verschiedene Dicken der Wabenplatte 1 anzupassen. Klebemittel 7 erlaubt dabei die endgültige Fixierung des Höhenausgleichs 12 nach dem erfindungsgemäßen Erwärmen unter relativer Bewegung zu einer Quelle für die erforderlichen Felder, vorzugsweise magnetische oder elektromagnetische Wechselfelder, beispielsweise durch Verfahren eines Mikrowellenbereichs oder insbesondere Induktionsbereiches oder vorteilhaft Durchfahren eines Mikrowellenbereichs oder insbesondere Induktionsbereiches, wie auch die Fixierung des Fußteils 9 des Inserts 5 auf der Innenseite der unteren Decklage 3.

Auf der rechten Seite dagegen ist ein Insert 5 vor (links) und nach (rechts) dem erfindungsgemäßen Erwärmen des Klebemittels 7, beispielsweise wie im letzten Absatz beschrieben, dargestellt. Hier findet sich im Fußteil 9 des Inserts von oben nach unten eine Verjüngung, in deren Bereich Klebemittel 7 aufgetragen ist, eine anschließende Erweiterung zur hinterschneidenden Verankerung im Klebstoff und eine erneute Zuspitzung am unteren Bereich der besagten Erweiterung, die zu einem teilweisen Eindringen in die untere Decklage 3 befähigt und so für die Fixierung des Fußteils 9 des Inserts gegen laterales Verschieben schon vor dem Verkleben sorgt. Nach dem Erwärmen des Klebemittels 7 sorgt dieses Klebemittel nach dem Erwärmungsprozess 10 für die Befestigung des Inserts 5 in der Wabenplatte 1.

Eine sehr einfache Form eines Inserts zeigt Fig. 3: Hier ist es als eine vorkonfektionierte Hülse 13 in einer Wabenplatte 1 dargestellt, die im Bereich, der innerhalb der Wabenplatte zu liegen kommt, mit Klebemittel 7 umhüllt ist. Das Klebemittel 7 kann hier neben den ein oder mehren, eine Erwärmung mittels der genannten Felder ermöglichenden Zusätzen auch ein oder mehrere Schaummittel beinhalten, die beim Erwärmen wie in den vorstehenden Abschnitten dargestellt ein Ausbreiten des Klebemittels 7 bewirken - in Fig. 3 ist das Klebemittel während des Aufschäumens 17 dargestellt. Durch das Aufschäumen entseht einerseits ein Bereich des Klebemittels 7, welcher die obere Decklage 2 hintergreift und die vorkonfektionierte Hülse 13 fixiert, andererseits wird eine Verklebung im Fußbereich an der unteren Decklage 3 erreicht. Weiter kann das Aufschäumen auch eine Klebebefestigung im Bereich des Füllmaterials 4 bewirken und dort für eine zusätzliche Fixierung sorgen.

Fig. 4 schließlich zeigt ebenfalls eine einfache Ausführungsform, bei der die Klebefixierung nur im Fußbereich eines Inserts, hier beispielsweise in Form einer vorkonfektionierten Hülse 13 dargestellt, auf der Innenseite der unteren Decklage 3 erfolgt. Hierfür ist das Insert nur im Fußbereich mit Klebemittel 7 beaufschlagt. Nach dem erfindungsgemäßen Erwärmen ist dann eine Verklebung nur in diesem Bereich gegeben.

In allen genannten und weiteren denkbaren Fällen sind Variationen des oder der mit Klebemittel 7 versehenen Bereiche der Inserts möglich, und/oder das Klebemittel kann auch vor Einführung des Inserts 5 in eine Aussparung der Wabenplatte 1 zur Aufnahme des Inserts 5 eingebracht werden.

**Bezugszeichenliste**

| Bezugszeichen | Bedeutung |
|---|---|
| 1 | Wabenplatte |
| 2 | obere Decklage |
| 3 | untere Decklage |
| 4 | Füllmaterial |
| 5 | Insert |
| 6 | Kopfbereich |
| 7 | Klebemittel |
| 8 | Rastvorsprung |
| 9 | Fußteil |
| 10 | Klebemittel nach Erwärmungsprozess |
| 11 | Rastlamellen |
| 12 | Höhenausgleich |
| 13 | vorkonfektionierte Hülse |
| 14 | Aufnahme für Befestigungselement oder Beschläge |
| 15 | Hauptkörper des Inserts |
| 16 | Halsteil |
| 17 | Klebemittel während des Aufschäumens |

## Patentansprüche

1. Verfahren zum Befestigen von Einsatzkörpern (Inserts (5) in einer Leichtbauplatte , die eine obere und eine untere Decklage (2,3) aufweist, zwischen denen ein Füllmaterial (4) angeordnet ist, bei dem eine mindestens abschnittsweise Verklebung zwischen den Einsatzkörpern und der Leichtbauplatte durch Erwärmung eines Klebemittels (7) vorgenommen wird, **dadurch gekennzeichnet ist, dass** die Erwärmung des Klebemittels (7) mittels elektrischer, elektromagnetischer oder magnetischer statischer Felder oder insbesondere entsprechender Wechsel-Felder erfolgt.

2. Verfahren nach Anspruch 1, **dadurch gekennzeichnet, dass** es sich bei der Leichtbauplatte um eine Wabenplatte (1) handelt.

3. Verfahren nach einem der Ansprüche 1 oder 2, **dadurch gekennzeichnet, dass** als Klebemittel (7) ein solches verwendet wird, welches ein oder mehre, eine Erwärmung mittels der genannten Felder ermöglichende Zusätze aufweist.

4. Verfahren nach einem der Ansprüche 1 bis 3, **dadurch gekennzeichnet, dass** als Feld ein Mikrowellenfeld verwendet wird und als eine Erwärmung mittels des Mikrowellenfeldes ermöglichender Zusatz ein Ferrit verwendet wird.

5. Verfahren nach Anspruch 4, **dadurch gekennzeichnet, dass** als Ferrit ein nanoskaliges Ferrit eingesetzt wird.

6. Verfahren nach einem der Ansprüche 4 oder 5, **dadurch gekennzeichnet, dass** als Mikrowellenfeld ein zirkular polarisiertes Mikrowellenfeld verwendet wird und die Bestrahlung mit der Mikrowelle in Gegenwart eines statischen äußeren magnetischen Feldes durchgeführt wird, insbesondere mit einer Stärke von 0,1 bis 15 Tesla.

7. Verfahren nach einem der Ansprüche 1 bis 3, **dadurch gekennzeichnet, dass** die Erwärmung des Klebemittels (7) mittels Induktion erfolgt und das Klebemittel ein oder mehre, eine Erwärmung mittels Induktion ermöglichende Zusätze aufweist.

8. Verfahren nach Anspruch 7, **dadurch gekennzeichnet, dass** dem Klebemittel (7) als ein oder mehrere, eine Erwärmung mittels Induktion ermöglichende Zusätze ein oder mehrere ferromagnetische und/oder ferrimagnetische Stoffe zugesetzt sind.

9. Verfahren nach einem der Ansprüche 1 bis 8, **dadurch gekennzeichnet, dass** das Erwärmen durch Verfahren der Leichtbauplatte relativ zu einem Felderzeuger durchgeführt wird.

10. Insert (5,13) für Leichtbauplatten, wie insbesondere Wabenplatten (1), welches mindestens bereichsweise in Bereichen, die vorzugsweise in eingesetzter Position des Inserts (5,13) innerhalb der Wabenplatte oder außerhalb derselben in nach fertiger Verklebung nicht sichtbaren Bereichen zu liegen kommen, mit einem Klebemittel (7) beaufschlagt ist, das ein oder mehrere, eine Erwärmung mittels elektrischer, elektromagnetischer oder magnetischer statischer Felder oder insbesondere entsprechender Wechsel-Felder ermöglichende Zusätze aufweist.

11. Insert (5) nach Anspruch 10, **dadurch gekennzeichnet, dass** es mehrteilig ist, insbesondere einen Höhenausgleich (12) aufweist, und/oder dass es ein oder mehrere Rastvorsprünge 8 zum Hinterschneiden einer oberen Decklage 2 eines Leichtbauelementes aufweist.

12. Insert nach einem der Ansprüche 10 oder 11, **dadurch gekennzeichnet, dass** es in Form einer vorkonfektionierten Hülse (13) ausgestaltet ist.

13. Insert (5,13) nach einem der Ansprüche 10 bis 12 und 14, **dadurch gekennzeichnet, dass** es als ein oder mehrer eine Erwärmung mittels elektrischer, elektromagnetischer oder magnetischer statischer Felder oder insbesondere entsprechender Wechsel-Felder ermöglichenden Zusätze ferrimagnetische und/oder ferromagnetische Stoffe beinhaltet, vorzugsweise ein oder mehrere entsprechende nanoskalige Zusätze, und das Klebemittel (7) ein phsikalisch härtender oder ein bei Erwärmung härtender Reaktivkleber ist, wobei gewünschtenfalls ein Schaumbildner zugesetzt sein kann.

14. Insert (5) nach einem der Ansprüche 10 bis 13, **dadurch gekennzeichnet, dass** es ein oder mehrere Bereiche in einem Fußteil (9) aufweist, welche eine untere Decklage (3) einer Leichtbauplatte teilweise von innen zur seitlichen Fixierung des Inserts (5) durchdringen können.

15. Verwendung eines Inserts nach einem der Ansprüche 10 bis 14 in einem Verfahren nach einem der Ansprüche 1 bis 9, **dadurch gekennzeichnet, dass** ein mit einem Klebemittel (7) ausgestattetes Insert (5,13) nach einem der Ansprüche 10 bis 14 in eine Leichtbauplatte eingebracht und dort durch Erwärmen mittels eines statischen elektrischen, elektromagnetischen oder magnetischen Feldes oder eines entsprechenden Wechselfeldes das Klebemittel (7) erwärmt wird und so das Insert mindestens bereichsweise mit der Leichtbauplatte verklebt wird.
